# DEMANDE DE BREVET EUROPEEN

(11) **EP 4 253 455 A1**
(43) Date de publication de la demande: **04.10.2023**
(21) Numéro de dépôt: 22305430.5
(22) Date de dépôt: 31.03.2022
(51) Int. Cl.: C08J 5/24, B29C 70/20, B32B 5/00

(54) **COPEAU EN MATÉRIAU COMPOSITE RECYCLÉ ET PROCÉDÉ DE FABRICATION**

(71) Demandeur: Fairmat, 75005 Paris (FR)
(72) Inventeur: SAADA, Benjamin, 75005 PARIS (FR); PLANCHE, Romain, 75017 PARIS (FR); TACCOEN, Nicolas, 75019 PARIS (FR)
(74) Mandataire: Santarelli

(57) **Abrégé**

La présente invention concerne un copeau en matériau composite comportant des fibres de carbone dans un adhésif durci, ledit copeau ayant une épaisseur sensiblement constante définie entre deux faces opposées parallèles du copeau, chaque face comportant en surface des fibres de carbone au moins en partie non incluses dans l'adhésif durci.

## Description

La présente invention concerne le domaine du recyclage des matériaux composites, en particulier des matériaux composites comportant des fibres de carbone.

Les matériaux composites à base de fibres de carbone sont utilisés dans de nombreux domaines techniques pour leurs propriétés mécaniques, notamment de résistance et de légèreté. Ils sont notamment couramment utilisés dans le domaine aéronautique, dans l'automobile, le nautisme, mais aussi dans le domaine de la construction, de l'énergie, etc.

Les matériaux composites à base de fibres de carbone comportent, de manière générale, des fibres de carbone incluses dans une matrice.

Plusieurs méthodes peuvent être utilisées pour fabriquer des fibres de carbone, le principe étant un dépôt de carbone à très haute température, soit à partir de papier ou de viscose (fibres « ex-cellulose »), soit à partir de polyacrylonitrile (fibres « ex-PAN »), soit à partir de résidus du pétrole ou de charbon (fibre « ex-brais »).

Les fibres de carbone sont incluses dans la matrice selon une orientation donnée, par exemple de manière unidirectionnelle, ou sous la forme de nappes de fibres tissées.

Concernant la matrice, généralement, elle est constituée d'un polymère ou elle comporte essentiellement un polymère. La matrice peut également être appelée « adhésif », ou encore « résine » (la matrice étant généralement un polymère). De manière bien connue, la matrice peut être de nature thermoplastique ou thermodurcissable. Des colles de nature analogue peuvent être utilisées de la même manière dans le cadre de la présente invention.

Ainsi, sauf s'il en est disposé autrement, les termes « matrice », « colle », « adhésif » et « résine » sont considérés comme synonymes dans la présente demande.

Les polymères thermodurcissables subissent une réaction chimique appelée réticulation lors de la mise en forme du matériau composite. Cette réaction génère des liaisons chimiques et est irréversible. Il est généralement admis que les polymères thermodurcissables les plus performants pour former un matériau composite à base de fibres de carbone sont les polyépoxydes (dits « époxy »).

Les polymères thermoplastiques sont des polymères qui, au-delà d'une certaine température, appelée « température de transition de phase », inférieure à leur température de dégradation thermique, deviennent visqueux et peuvent ainsi être mis en forme. Lorsque la température descend en-dessous de cette température de transition de phase, le polymère durcit et retrouve sa raideur initiale. Ce durcissement est réversible, en chauffant de nouveau le polymère.

Les polymères thermoplastiques les plus courants sont le polyéthylène (PE), le poly(téréphtalate d'éthylène) (PET) ou le polycaprolactame (PA-6). Pour certaines applications, des polymères thermoplastiques spéciaux peuvent être utilisés, tels le poly(éther-éther-cétone de phénylène) (PEEK), le poly(sulfure de phénylène) (PPS), ou le polyetherimide (PEI).

Les applications des matériaux composites à base de fibres de carbone étant nombreuses et de plus en plus répandues, la question du recyclage de ces matériaux se pose. Outre le fait que les quantités de matériaux pouvant être recyclés augmentent, ces matériaux composites sont des matériaux de grande valeur (en grande partie du fait qu'ils contiennent des fibres de carbone), dont la valorisation peut se révéler économiquement pertinente.

Le recyclage peut concerner des éléments en matériau composite en fin de vie ou ayant subi un endommagement, des éléments fabriqués mais ne répondant pas ou plus à certains standards requis pour l'usage auquel ils sont destinés (en particulier dans le domaine aéronautique ou spatial), ou encore, plus rarement, des éléments non utilisés à une certaine date.

Pour recycler des matériaux composites renforcés avec des fibres de carbone, trois grandes catégories de méthodes ont été développées : le recyclage dit mécanique, le recyclage dit chimique et le recyclage dit thermique.

Le recyclage mécanique consiste, dans son principe, à fractionner et à broyer des pièces en matériau composite existantes pour dissocier au moins en partie les fibres de la résine, de sorte à obtenir des fibres plus ou moins longues qui peuvent être réutilisées comme renfort dans de la résine neuve. Les particules peu fibreuses issues du broyage, qui se présentent sous forme de poudre, peuvent être mêlées à une résine lors de la formation d'un nouvel élément en matériau composite.

Les morceaux de composite broyés sont utilisés comme éléments de remplissage ou comme renfort dans des pièces moulées, mais ne visent pas réellement à remplacer des fibres de carbone vierges telles qu'utilisées dans les procédés classiques de fabrication d'éléments en composite (à base de matériaux non recyclés).

Dans ce procédé, la poudre obtenue par broyage des matériaux composites à recycler peut être tamisée pour être triée en plusieurs catégories de tailles de particules, sans toutefois que cette taille n'ait une influence significative sur les propriétés mécaniques de l'élément formé ensuite en incluant ces particules.

Globalement, on estime que les propriétés mécaniques (résistance en flexion ou raideur en flexion) d'une pièce obtenue par un procédé de recyclage mécanique de l'état de la technique sont au moins divisées par quatre comparativement à une pièce neuve similaire. Les matériaux composites à base de fibres de carbone recyclées obtenus par des procédés de recyclage mécanique ont donc généralement un usage limité à certains domaines dans lesquels les propriétés mécaniques, rapportées à la masse, n'ont pas besoin d'être très élevées. Ils sont ainsi surtout utilisés dans la construction (bâtiments).

Le recyclage chimique consiste à dégrader chimiquement la résine durcie d'un matériau composite dans le but de récupérer des fibres de carbone présentes dans ce matériau. Les fibres récupérées sont ensuite généralement alignées et/ou filées afin de créer un fil à partir de plusieurs milliers de fibres récupérées. Les propriétés mécaniques des pièces formées en matériaux composites comportant ces fibres recyclées sont largement moindres que celles de matériaux composites comportant des fibres de carbone neuves, non-recyclées.

Plusieurs procédés de dégradations chimiques sont connus, notamment la solvolyse classique, la solvolyse « en conditions douces », ou la solvolyse en conditions supercritiques. Dans un procédé de solvolyse classique, les pièces à recycler sont plongées dans un solvant, à haute température (plus de 200°C) et à haute pression (de l'ordre de 180 bar), pour que la résine soit décomposée. Il peut s'agir par exemple d'acides concentrés (acide nitrique ou acide sulfurique notamment).

Dans un procédé de solvolyse en conditions douces, des températures plus modérées que dans la solvolyse classique, inférieures à 200°C, sont utilisées. Le procédé a lieu à pression atmosphérique (pression ambiante), et des solvants plus doux, comme de l'acétone ou du N,N-diméthylformamide sont utilisés, ainsi qu'éventuellement des catalyseurs comme le peroxyde d'hydrogène ou l'acide peroxyacétique. Un traitement préalable à l'acide acétique peut également être employé. Ceci étant, la solvolyse en conditions douces présente un rendement de production assez faible.

Dans un procédé de solvolyse en conditions supercritiques, des solvants sont utilisés en conditions supercritiques pour présenter une meilleure diffusivité et une capacité accrue de solvatation. C'est un procédé complexe et onéreux.

Enfin, le recyclage thermique consiste dans son principe à dégrader thermiquement la résine d'un matériau composite pour en récupérer les fibres de carbone. La chaleur peut être apportée par un procédé de pyrolyse, qui consiste globalement à brûler la résine dans un four, par un procédé de lit fluidisé qui utilise l'action combinée d'un solvant et d'une haute température, et enfin par micro-ondes.

Bien que ces procédés soient en voie d'optimisation, les fibres récupérées ont des propriétés mécaniques fortement dégradées comparativement à des fibres neuves. Les fibres récupérées sont généralement courtes, elles doivent être alignées et filées pour être réutilisées dans des applications nécessitant des caractéristiques mécaniques correctes. Sinon, elles sont utilisées en remplissage, comme le sont par exemple les poudres obtenues dans les procédés de recyclage mécaniques évoqués ci-dessus.

En résumé, les différentes techniques connues dans le domaine du recyclage des matériaux composites à base de fibres de carbone consistent à :
- broyer le matériau composite pour utiliser les broyats comme renfort (recyclage mécanique);
- ou dégrader la résine pour régénérer des fibres de carbone (recyclage chimique ou thermique).

Mais ces deux solutions ont chacune des inconvénients importants : elles offrent des matériaux ayant de faibles performances mécaniques, et/ou elles sont coûteuses et/ou complexes à mettre en œuvre. Les techniques de recyclage dans lesquelles la résine est dégradée pour récupérer les fibres de carbone ont en outre un coût environnemental important. En effet, elles rejettent la résine dégradée sous forme liquide ou gazeuse. Ces rejets doivent être traités.

La présente invention vise à proposer des éléments recyclés qui peuvent être incorporés dans une matrice afin de préparer une pièce en matériau composite, lesdits éléments recyclés permettant de pallier les inconvénients mentionnés ci-avant.

Plus particulièrement, l'invention vise un copeau en matériau composite comportant des fibres de carbone dans un adhésif durci, ledit copeau ayant une épaisseur sensiblement constante définie entre deux faces opposées parallèles du copeau, chaque face comportant en surface des fibres de carbone au moins en partie non incluses dans l'adhésif durci.

On entend par « copeau » une tranche de faible épaisseur obtenue à partir d'un matériau composite à recycler comportant des fibres de carbone. Le copeau comporte des fibres de carbone au moins en partie incluses dans un adhésif durci. Au moins une majorité des fibres du copeau s'étendent sensiblement parallèlement aux faces opposées du copeau.

Dans l'ensemble de la présente demande, le terme « sensiblement » fait référence de manière classique à la perception de cette caractéristique selon le système utilisé pour sa mesure ou sa fabrication. Si une caractéristique est observée à l'œil nu, le terme « sensiblement » fait donc référence à la perception qu'a un observateur de cette caractéristique. Une expression contenant le terme "sensiblement" doit être interprétée comme une caractéristique technique produite dans la marge de tolérance de sa méthode de fabrication. Notamment, le caractère « sensiblement parallèle » entre deux éléments peut s'entendre à 10° d'angle près. Si la fibre considérée est incluse dans un tissu (typiquement taffetas, sergés ou satins), la direction d'extension de la fibre est considérée en négligeant les ondulations de la fibre liées au tissage.

Le copeau selon l'invention a avantageusement une faible épaisseur (e) comparativement à ses autres dimensions. Le copeau étant ainsi une pièce essentiellement bidimensionnelle, de faible épaisseur, ses autres dimensions correspondent typiquement à la plus grande dimension (d) mesurable en surface du copeau et à la dimension mesurée perpendiculairement, également en surface du copeau. Ainsi, par « face du copeau », on entend l'une quelconque des faces du copeau à savoir la face inférieure ou la face supérieure du copeau. Chacune de ces faces présentant une surface dite surface du copeau.

Avantageusement, le ratio (e)/(d) est compris entre 0,05 et 0,0005, préférentiellement entre 0,01 et 0,001 et encore plus préférentiellement entre 0,005 et 0,001.

Dans la présente demande, sauf indication contraire, les gammes s'entendent bornes incluses.

Avantageusement, l'épaisseur du copeau est comprise entre 200 µm et 1mm, de préférence entre 200 µm et 500 µm.

La plus grande dimension (d) du copeau peut être avantageusement comprise entre 1 cm et 1m, de préférence, entre 5 cm et 50 cm, tel qu'entre 5 et 20 cm, plus préférentiellement, entre 7,5 et 15 cm ou encore plus préférentiellement entre 8 et 12 cm ou alternativement entre 10 cm et 20 cm.

A titre d'exemple, la longueur du copeau est de l'ordre de 10 cm. Par « de l'ordre de X », on vise une valeur de X plus ou moins 10%.

Le copeau peut présenter une largeur comprise entre 2 et 20 mm, de préférence entre 5 et 15 mm, encore plus préférentiellement entre 7 et 10 mm.

A titre d'exemple, la largeur du copeau est de l'ordre de 9 mm.

On entend par adhésif durci, un adhésif qui a subi une réaction chimique appelée réticulation ou polymérisation. Cette réaction chimique se produit avant la formation des copeaux, on parle alors d'adhésif durci lors d'un durcissement préalable à la formation du copeau.

L'adhésif durci du copeau peut être avantageusement une résine thermodurcissable telles que les résines époxy, ester cyanate et résines phénoliques. Les résines époxy appropriées comprennent les éthers diglycidyliques de bisphénol A, les éthers diglycidyliques de bisphénol F, les résines époxy novolaques et les éthers N-glycidyliques, les esters glycidyliques, les éthers glycidyliques aliphatiques et cycloaliphatiques, les éthers glycidyliques d'aminophénols, les éthers glycidyliques de n'importe quels phénols substitués et leurs mélanges.

Sont également inclus des mélanges modifiés des polymères thermodurcissables susmentionnés.

Par « mélange modifié », on vise un polymère modifié, typiquement, par addition de caoutchouc ou de thermoplastique.

L'adhésif durci du copeau peut aussi être une résine thermoplastique. Parmi les thermoplastiques, on peut distinguer les plastiques à hautes performances, les plastiques techniques et les plastiques standards. La plupart des thermoplastiques utilisés dans les matériaux composites sont des plastiques à hautes performances ou des plastiques techniques. Ces plastiques se distinguent notamment des plastiques standards par une résistance à l'usure et une résistance chimique plus importantes.

Les thermoplastiques, selon leur nature, peuvent être durs sous forme amorphe ou sous forme cristalline.

Parmi les thermoplastiques amorphes couramment utilisés dans les matériaux composites, il y a les polyétherimides (PEI), le polyethersulfone (PES), et les polysulfones (PSU).

Parmi les thermoplastiques cristallins couramment utilisés dans les matériaux composites, il y a les polyamides (PA), le poly(téréphtalate d'éthylène), le polyphthalamide (PPA), le poly(sulfure de phénylène) (PPS), et le polyétheréthercétone (PEEK).

Une fibre de carbone est considérée comme incluse dans l'adhésif durci si toute sa surface est en contact avec cet adhésif, c'est-à-dire si toute le surface de la fibre est enrobée par l'adhésif. Dans toute la demande, les termes « incluses dans » et « enrobées par » sont considérés comme équivalents.

Dans le copeau selon l'invention, la partie de la fibre de carbone non incluse dans l'adhésif durci constitue une fibre nue.

La présence de fibres nues en surface du copeau résulte du procédé de découpe du copeau selon l'invention.

De préférence, le copeau selon l'invention présente un taux surfacique de fibres nues supérieur ou égal à 22%, le pourcentage étant rapporté à la surface totale de la face du copeau analysée.

Le taux surfacique de fibres nues représente la surface occupée par les fibres de carbone non incluses dans l'adhésif durci par rapport à la surface totale de la face du copeau analysée.

Le copeau peut présenter un taux surfacique de fibres nues supérieur ou égal à 22%, de préférence compris entre 24 % et 60%, tel qu'un taux surfacique de fibres nues compris entre 26 et 50%.

Le taux surfacique de fibres nues est déterminé sur un échantillon comportant des fibres de carbone ou sur un copeau selon l'invention, selon la méthode de mesure comportant les étapes suivantes :
a) Disposition horizontale de l'échantillon ou du copeau sur la platine d'un microscope numérique, de sorte à obtenir des images où l'orientation des fibres est verticale, le microscope étant orienté d'un angle de 20 à 40 °, de préférence 30° par rapport à la droite normale au plan de l'échantillon ou du copeau et une lumière annulaire partielle de type LED est appliquée de sorte que le faisceau de lumière atteigne la surface des fibres selon une direction orthogonale à l'axe d'orientation des fibres
b) Sélection des pixels présentant une valeur seuil de niveau de gris supérieure ou égale à 50
c) Décompte des pixels sélectionnés et obtention du pourcentage de surface occupée par les pixels sélectionnés par rapport à la surface totale de l'image, ce pourcentage correspondant à la valeur du taux surfacique de fibres nues.

Une lumière annulaire est une lumière formant un cercle autour de l'objectif du microscope.

Le plan de l'échantillon ou du copeau est matérialisé par une face de l'échantillon ou du copeau.

Le cercle de lumière peut être divisé en quatre quarts. On parle de « lumière annulaire partielle » lorsque seul un des quarts est utilisé pour éclairer l'échantillon, définissant ainsi une lumière annulaire gauche, droite, haute ou basse, selon la localisation du quart par rapport à l'objectif du microscope.

Une lumière annulaire se distingue d'une lumière coaxiale qui éclaire l'échantillon à partir du centre de l'objectif du microscope.

La lumière annulaire partielle appliquée à l'étape a) peut être une lumière partielle droite, gauche, haute ou basse. De préférence la lumière annulaire partielle appliquée à l'étape a) est une lumière annulaire partielle gauche ou droite, encore plus préférentiellement, la lumière annulaire partielle est droite.

Dans le cas d'une lumière annulaire partielle droite, le microscope est alors orienté d'un angle de 20 à 40 °, de préférence 30° sur la droite par rapport à la droite normale au plan du copeau.

De préférence, le taux surfacique de fibres nues est déterminé selon la méthode exposée à l'exemple 2, point 1.

De préférence, dans le copeau selon l'invention, une face présente une rugosité mesurée par une perte de masse supérieure ou égale à 0,008%, ladite perte de masse étant mesurée par un test d'abrasion effectuée sur abrasimètre linéaire à l'aide d'une gomme abrasive H18 sur 100 cycles.

On entend par « rugosité » d'un copeau, l'état de la face du copeau qui présente des aspérités. De préférence, chaque face du copeau présente une rugosité.

Cette rugosité est déterminée selon la méthode de mesure comportant les étapes suivantes :
a) Pesée initiale du copeau pour déterminer sa masse initiale,
b) Fixation du copeau sur le support d'un abrasimètre linéaire,
c) Application d'une gomme abrasive H18 pendant 100 cycles d'abrasion, avec une longueur de cycle de 10 cm et une vitesse de cycle de 25 cycles/min,
d) Pesée finale du copeau pour déterminer sa masse finale,
e) Détermination de la rugosité par calcul de la différence entre la masse initiale du copeau (obtenue à l'étape a)) et la masse finale du copeau (obtenue à l'étape d)).

De préférence, la rugosité est mesurée selon la méthode décrite à l'exemple 2.2.

De préférence, le copeau présente une rugosité mesurée par une perte de masse comprise entre 0,014% et 0,20%, et plus préférentiellement, la perte de masse est comprise entre 0,014% et 0,15%.

Avantageusement, le copeau selon l'invention présenter un taux surfacique de fibres nues supérieur ou égale à 22% et une rugosité mesurée par une perte de masse supérieure ou égale à 0,008%. De préférence, le copeau présente un taux surfacique de fibres nues compris entre 24% et 60% et une perte de masse comprise entre 0,014% et 0,20%. Encore plus préférentiellement, le copeau peut présenter un taux surfacique de fibres nues compris entre 26% et 50%, et une perte de masse comprise entre 0,014% et 0,15%.

Avantageusement, dans le copeau selon l'invention, lesdites fibres de carbone s'étendent sensiblement parallèlement aux dites faces opposées du copeau.

Plus particulièrement, les fibres de carbones incluses dans l'adhésif durci s'étendent sensiblement parallèlement aux dites faces opposées du copeau.

Les fibres de carbones non incluses dans l'adhésif durci peuvent s'étendent sensiblement parallèlement aux dites faces opposées du copeau.

Avantageusement, dans le copeau selon l'invention, les fibres de carbones sont orientées dans une même direction.

Des fibres de carbone orientées dans une même direction sont également dites unidirectionnelles.

Plus particulièrement, les fibres de carbones incluses dans l'adhésif durci sont orientées dans une même direction.

Les fibres de carbone non incluses dans l'adhésif durci peuvent être orientées dans une même direction.

Avantageusement, le copeau a une forme rectangulaire.

De préférence, chaque face du copeau selon l'invention présente une surface d'au moins 1 cm².

Chaque face présente une surface appelée surface du copeau.

La surface du copeau peut être d'au moins 3 cm², 5 cm², 10 cm² ou 20 cm², 100cm².

La surface du copeau peut donc être comprise entre 1 et 100 cm², entre 2 et 25 cm² ou entre 5 et 15 cm².

L'invention vise également un procédé de fabrication d'un copeau selon l'invention, ledit procédé comprenant les étapes suivantes :
- fourniture d'un matériau composite comportant des fibres de carbone orientées de manière sensiblement parallèle dans un adhésif durci;
- découpage mécanique du matériau composite avec un dispositif à lame, ledit découpage étant réalisée en positionnant les fibres de carbones parallèlement à la direction d'avancement de la lame dudit dispositif à lame.

A titre d'exemple, le dispositif à lame peut être un système de type rabot. Un système de type rabot correspond à une machine de découpe comportant une lame permettant de séparer de fines tranches d'épaisseur régulière de la surface d'un élément sur lequel il est passé.

Le procédé de fabrication du copeau est plus particulièrement décrit à l'exemple 1.

L'invention a également pour objet l'utilisation de copeau tel que défini ci-dessus dans une pièce en matériau composite.

D'autres caractéristiques et avantages de l'invention apparaitront dans la figure et les exemples qui suivent et qui sont donnés à titre illustratif.

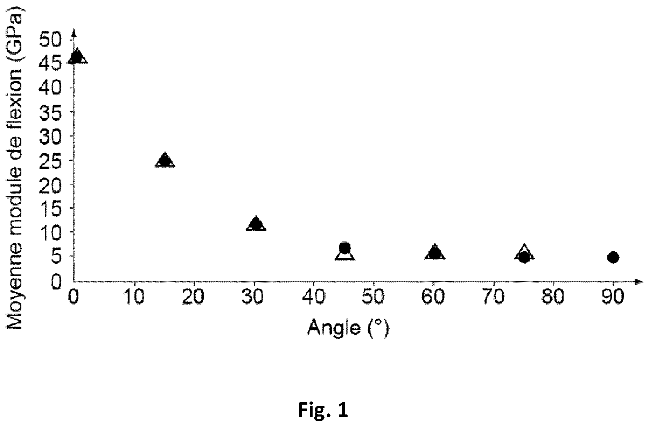

La figure 1 représente, sous forme d'un graphique, le module de flexion d'un panneau comprenant des copeaux selon l'invention organisés de manière unidirectionnelle, les copeaux étant obtenus à partir de matériau composite à recycler, et celui d'un panneau neuf contenant des fibres de carbone orientées de manière unidirectionnelle.

### Exemple 1 : Obtention d'un copeau selon l'invention

La formation de copeaux est réalisée à partir d'éléments en matériau composite à base de fibres de carbone qui sont à recycler.

Pour ce faire, les copeaux sont obtenus par découpage mécanique desdits éléments.

Le découpage des copeaux peut être réalisé à l'aide d'une machine de découpe telle qu'un dispositif à lame. Le dispositif à lame peut être un système de type rabot. Un système de type rabot correspond à une machine de découpe comportant une lame permettant de séparer de fines tranches d'épaisseur régulière de la surface d'un élément sur lequel il est passé.

Lorsqu'un élément est découpé pour former des copeaux, la lame du dispositif à lame est positionnée, de manière classique, de sorte que le fil de la lame évolue dans un plan parallèle à la direction d'avancement de la lame dudit dispositif à lame, la direction d'avancement de la lame du dispositif à lame étant rectiligne.

Le « fil de la lame » aussi appelé « arête vive » correspond au tranchant de la lame qui pénètre en premier la matière à découper.

Le matériau à découper est positionné dans la machine de découpe selon l'organisation des fibres de carbone qu'il contient.

Si les fibres dans le matériau à découper sont unidirectionnelles, c'est-à-dire incluses dans une matrice sensiblement parallèlement, dans une seule direction, alors les fibres sont positionnées parallèlement à la direction d'avancement de la lame dudit dispositif à lame.

Si les fibres sont incluses sous la forme de nappes tissées, on placera préférentiellement la pièce de sorte que les fils de trame ou de chaîne soient sensiblement parallèles à la direction d'avancement de la lame dudit dispositif à lame.

Les fibres peuvent aussi être disposées selon une succession de couches, chaque couche comportant des fibres unidirectionnelles, mais les couches présentant des orientations des fibres différentes. C'est par exemple le cas pour des matières dites « quadri directionnelles », dont les couches peuvent présenter les orientations relatives successives suivantes : 0° (couche de référence), 90°, 45°, -45°. Ainsi, une matière « quadri directionnelle » est une matière stratifiée comportant plusieurs couches de fibre de carbone unidirectionnelles, les couches étant orientées dans quatre directions différentes : 0°, 90°, 45°, -45°.

Le dispositif à lame peut avantageusement être réglé de sorte que sa lame attaque l'élément entre deux couches de fibres, qu'il s'agisse de deux couches de fibres unidirectionnelles ou de deux nappes tissées.

Le plan de coupe sera avantageusement maintenu entre les couches de fibres afin de conserver autant que possible leur intégrité.

De fines tranches de matériau composite sont ainsi obtenues. Ces tranches peuvent notamment avoir une épaisseur comprise entre 200 µm et 1mm, de préférence entre 200 µm et 500 µm.

Les éléments à découper sont mis à la longueur souhaitée pour les copeaux avant d'être découpés en tranches par la machine de découpe, de sorte que les copeaux ayant la longueur souhaitée sont directement obtenus en sortie de la machine de découpe.

Alternativement, les tranches sont ensuite recoupées pour obtenir des copeaux. Typiquement, elles sont coupées transversalement par tout moyen de découpe adapté, par exemple par sciage, afin de former de fins copeaux rectangulaires de longueur régulière. D'autres formes de copeaux peuvent bien évidemment être découpées dans les tranches obtenues.

Par exemple, pour la réalisation de panneaux plans, des copeaux de 10 cm à 20 cm de longueur ont été obtenus et ont permis l'obtention de résultats très bons en termes de performances mécaniques comme exemplifié ci-après. Des longueurs supérieures peuvent également être mises en œuvre, telles que de l'ordre de 50 cm, voire de 1 m.

Bien évidemment, le procédé de découpe décrit ci-dessus peut être adapté selon l'application considérée et les quantités à produire.

Une fois que les copeaux sont formés, ils se présentent donc sous la forme de fins éléments comportant des fibres de carbone incluses, au moins en partie, dans une résine durcie. Les copeaux se présentent donc sous la forme de pièces sensiblement bidimensionnelles (en ce que leur épaisseur est très faible comparativement à ses autres dimensions). La surface des copeaux est avantageusement d'au moins 1 cm², et de préférence supérieure à 3 cm², de l'ordre de 10 cm², voire supérieure, par exemple jusque 100 cm ² environ.

Les fibres de carbone sont orientées dans la résine durcie des copeaux. De préférence, elles sont sensiblement parallèles, orthogonales entre elles, et/ou orientées à 45° les unes des autres.

Les fibres des copeaux ayant une épaisseur sensiblement constante, ils comportent deux faces opposées (entre lesquelles l'épaisseur est définie). Le découpage des copeaux est réalisé de sorte à conserver autant que possible les fibres de carbone intactes. Pour cela, le découpage des copeaux est réalisé de sorte que les fibres (dans leur majorité, voire dans leur quasi-totalité ou leur totalité) s'étendent parallèlement aux faces opposées des copeaux. Les fibres s'étendent ainsi dans des plans parallèles au plan général d'extension du copeau, et peuvent présenter une grande longueur malgré la faible épaisseur des copeaux.

Par « majorité », on entend plus de 50% en nombre.

Par « quasi-totalité », on entend plus de 90% en nombre.

### Exemple 2 : Caractérisation des copeaux selon l'invention

La demanderesse a effectué des tests permettant de caractériser les copeaux selon la présente invention. Ces tests ont été réalisés à partir des matières listées dans le tableau 1.

Ces matières se présentent sous la forme de jonc, de plaque ou de nappe en composite.

Un jonc en composite est un cylindre obtenu par pultrusion d'un matériau composite.

Une nappe composite se distingue d'une plaque composite par son épaisseur. En effet la nappe a une épaisseur de l'ordre de 0,2 mm tandis que la plaque composite a une épaisseur de plusieurs millimètres.

Les nappes composites partiellement consolidées sont des nappes dont les fibres de carbone sont intégrées dans une matrice ou résine dont la polymérisation a débuté mais n'est pas achevée. Elles se distinguent donc des nappes composites comportant des fibres de carbone dans une matrice non polymérisée car pour ces dernières la polymérisation n'a pas commencé.

Lorsqu'aucune précision n'est apportée sur l'état de polymérisation de la matrice des matières présentées dans le tableau 1 ci-dessus, cela signifie que la matrice est polymérisée.

**Tableau 1 : Liste des matières utilisées**

| **N°** | **Composition du matériau composite** | **Technique d'obtention des copeaux** |
|---|---|---|
| **1** | Jonc en composite comportant des fibres de carbone dans une matrice époxy, avec une disposition UD* | Découpe selon l'exemple 1 avec un dispositif à lame |
| **2** | Jonc en composite comportant des fibres de carbone dans une matrice époxy, avec une disposition UD* | Découpe selon l'exemple 1 avec un dispositif à lame puis ponçage de la surface avec un papier abrasif de grain P1000 |
| **3** | Plaque composite comportant des fibres de carbone dans une matrice époxy, avec une disposition UD* | Découpe selon l'exemple 1 avec un dispositif à lame |
| **4** | Plaque composite comportant des fibres de carbone dans une matrice époxy, avec une disposition UD* | Pas de découpe, copeaux lisses |
| **5** | Plaque composite comportant des fibres de carbone dans une matrice époxy, avec disposition UD* | Pas de découpe, ponçage avec grain P80 |
| **6** | Nappe composite de 0,15 mm d'épaisseur comportant des fibres de carbone dans une matrice époxy, avec une disposition UD* | Pas de découpe |
| **7** | Nappe composite comportant des fibres de carbone dans une matrice époxy non polymérisée, avec une disposition UD* | Pas de découpe |
| **8** | Nappe composite comportant des fibres de carbone dans une matrice époxy non polymérisée, avec une disposition UD* | Pas de découpe, ponçage avec grain P80 |
| **9** | Nappe composite partiellement consolidée comportant des fibres de carbone dans une matrice époxy, avec une disposition UD* | Pas de découpe, copeaux lisses |
| **10** | Nappe composite partiellement consolidée comportant des fibres de carbone dans une matrice époxy, avec une disposition UD* | Pas de découpe, ponçage avec grain P80 |
| **11** | Nappe composite comportant des fibres de carbone dans une résine thermoplastique de sulfure de polyphénylène (PPS), avec une disposition UD* | Pas de découpe |
| **12** | Nappe composite comportant des fibres de carbone dans une matrice thermoplastique, avec une disposition UD* | Pas de découpe |

| | | |
|---|---|---|
| *UD : disposition unidirectionnelle des fibres de carbone | | |

Les matières 1 à 12 ont toutes été dimensionnées pour présenter la même largeur : 9 mm et la même longueur : 100 mm. Pour ce faire, les matières 1 et 2 ont été dimensionnées à l'aide d'une scie à onglet, la matière 3 a été dimensionnée à l'aide d'un massicot et les matières 4 à 12 ont été dimensionnées soit via un massicot soit à l'aide de ciseaux.

Puis, les matières 1 à 3 ont été découpées afin d'obtenir des copeaux selon l'invention. Les copeaux selon l'invention sont obtenus par le procédé tel que décrit dans l'exemple 1.

Le découpage mécanique au rabot est réalisé de telle sorte qu'il favorise les coupes selon l'axe des fibres. En effet, les matières 1-3 se composant de fibres majoritairement unidirectionnelles c'est-à-dire de fibres orientées dans une seule direction, celles-ci sont positionnées parallèlement à la direction d'avancement de la lame du dispositif de découpage mécanique à lame.

Le découpage tel que décrit ci-dessus permet d'obtenir des copeaux d'épaisseurs régulières, de conserver autant que possible les fibres de carbone intactes et d'obtenir des copeaux comprenant des fibres plus longues.

Les copeaux obtenus à partir des matières 1 à 4 présentent une épaisseur comprise entre 0,3 et 0,5mm.

Les matières 4 à 12 servent d'exemples comparatifs et n'ont pas été découpées.

### 1. Analyse de surface : détermination du taux surfacique de fibres nues

Des analyses de surface ont été effectuées sur l'ensemble des copeaux obtenus à partir des matières 1 à 12 selon le mode opératoire détaillé ci-dessous.

Le taux surfacique de fibres nues est défini comme la surface occupée par des fibres de carbone nues, c'est-à-dire par des fibres de carbone non incluses dans ou non enrobées par de la résine, rapportée à la surface totale analysée.

Le taux surfacique de fibres nues a été déterminé pour chacune des matières 1 à 12 en utilisant un microscope numérique VHX-970F commercialisé par la marque Keyence. Ce dernier est muni d'un objectif zoom VH-Z20T capable de fournir des grossissements de x20 à x200. Les traitements d'images ont été réalisés avec le logiciel ImageJ, version 2.1.0/1.53c.

Le principe de la mesure est de réaliser un traitement d'image avec le microscope en sélectionnant les zones les plus lumineuses, correspondant théoriquement aux fibres de carbone, et en les extrayant pour mesurer la surface qu'elles occupent. Le protocole est le suivant :
a) Disposition de l'échantillon
   L'échantillon ou copeau est placé à l'horizontal sur la platine du microscope de sorte que l'orientation des fibres sur les clichés réalisés soit verticale. Le microscope est orienté d'un angle de 30° par rapport à la droite normale au plan de l'échantillon ou du copeau (de préférence à droite) et une lumière annulaire partielle de type LED (de préférence, une lumière annulaire partielle droite par rapport à l'objectif du microscope) est appliquée de sorte que le faisceau de lumière atteigne la surface des fibres selon une direction orthogonale à l'axe des fibres. Cette configuration permet d'une part d'éviter la prise en compte de fibres qui sont enrobées dans des résines transparentes et d'autre part d'empêcher la réflexion des zones de résines.
b) Sélection des pixels
   Une sélection des pixels est réalisée par le logiciel en effectuant les étapes suivantes dans l'onglet "Image" > "Adjust" > "Color Treshold". Cette option permet de sélectionner le niveau de luminosité à partir duquel les pixels seront sélectionnés. Pour toutes les matières testées le niveau de gris a été fixé à 50 (paramètre « Brightness »). Toutes les zones dont le niveau de gris est supérieur ou égal à 50 ont ainsi été sélectionnées.
c) Résultats
   Une fois que les pixels ont été sélectionnés, leur décompte se fait en allant dans l'onglet "Analyze" > "Analyze Particles". La taille des pixels est fixée à partir de 0 et leur circularité est fixée entre 0 et 1. Le logiciel donne alors comme résultat le pourcentage de surface occupée par les pixels sélectionnés par rapport à la surface totale de l'image, ce qui correspond à la valeur du taux surfacique de fibres nues.

Pour chaque matière, trois copeaux sont analysés et dix mesures sont effectuées par copeau. Le taux surfacique de fibres nues par copeau est obtenu en faisant la moyenne de ces 10 mesures. Le taux surfacique de fibres nues par matière est obtenu en faisant la moyenne des taux obtenus par chacun des trois copeaux. Les résultats sont présentés dans le tableau 2 ci-dessous.

**Tableau 2 : Taux surfacique de fibres nues des matières 1 à 12**

| **N°** | **Moyenne (%)** | **Ecart-type** | **CV (%)** | **Intervalle (%)** | |
|---|---|---|---|---|---|
| **1** | 33,27 | 1,17 | 3,50% | 32,10 | 34,43 |
| **2** | 30,34 | 4,06 | 13,38% | 26,28 | 34,40 |
| **3** | 40,68 | 2,44 | 6,01% | 38,23 | 43,12 |
| **4** | 11,90 | 2,01 | 16,87% | 9,89 | 13,91 |
| **5** | 13,66 | 2,23 | 16,35% | 11,43 | 15,90 |
| **6** | 10,47 | 2,87 | 27,39% | 7,60 | 13,34 |
| **7** | 2,31 | 0,75 | 32,30% | 1,56 | 3,06 |
| **8** | 11,00 | 1,25 | 11,32% | 9,76 | 12,25 |
| **9** | 4,77 | 2,11 | 44,31% | 2,66 | 6,88 |
| **10** | 3,41 | 0,36 | 10,70% | 3,04 | 3,77 |
| **11** | 15,70 | 5,50 | 35,05% | 10,20 | 21,21 |
| **12** | 0,72 | 0,07 | 9,16% | 0,66 | 0,79 |

Les copeaux obtenus à partir des matières 1 à 3 (selon l'invention) présentent tous un taux surfacique de fibres nues supérieur ou égal à 22% (en tenant compte de l'écart-type) ce qui n'est pas le cas des copeaux comparatifs des matières 4 à 12.

Cette caractéristique technique définissant les copeaux selon l'invention permet l'obtention de matériau composite ayant des propriétés mécaniques élevées, comme démontré ci-après.

### 2. Test d'abrasion

Un test d'abrasion a été effectué afin de déterminer la perte de masse des copeaux, en vue de caractériser leur rugosité.

Ce test a été effectué à l'aide d'un abrasimètre linéaire Taber^{®} (5750) muni d'une gomme d'abrasion H18. Ce test se déroule selon le mode opératoire détaillé ci-dessous :
L'échantillon est fixé sur un support puis soumis à l'action de la gomme abrasive H18 (caractéristique d'un matériau non résilient) montée sur l'abrasimètre linéaire. Les paramètres suivants sont utilisés :
- Aucune charge appliquée en plus du support;
- Nombre de cycles d'abrasion : 100;
- Longueur de cycle : 10 cm;
- Vitesse de cycle : 25 cycles / minutes.

Les échantillons sont pesés initialement, puis après 50 cycles, et enfin après 100 cycles, afin de déterminer la perte de masse totale. Pour chaque matière, trois échantillons ont été testés au minimum et la moyenne des valeurs obtenues a été calculée.

La perte de masse renseigne de l'état de surface des copeaux. En effet, l'action de la gomme abrasive sur une surface lisse entrainera une perte de masse plus faible en comparaison à son action sur une surface rugueuse comprenant des aspérités. Ceci s'explique par le fait que l'action de la gomme abrasive va entrainer l'élimination de ces aspérités de surface.

Ainsi, plus la perte de masse est importante, plus la surface est rugueuse et donc contient des aspérités.

Les résultats présentés au tableau 3 sont exprimés en gramme, et en pourcentage de masse perdue par rapport à la masse initiale.

**Tableau 3 : Résultats du test d'abrasion**

| **N°** | **Perte (%)** | **Ecart-type** | **CV (%)** | **Intervalle (%)** | |
|---|---|---|---|---|---|
| **1** | 0,065 | 0,0361 | 55,87% | 0,10 | 0,029 |
| **2** | 0,026 | 0,0071 | 27,50% | 0,033 | 0,019 |
| **3** | 0,019 | 0,00473 | 25,02% | 0,024 | 0,014 |
| **4** | 0,015 | 0,01246 | 81,18% | 0,028 | 0,003 |
| **5** | 0,068 | 0,08410 | 124,41% | 0,152 | -0,016 |
| **6** | 0,005 | 0,00067 | 14,83% | 0,005 | 0,004 |
| **7** | 0,024 | 0,02271 | 94,96% | 0,047 | 0,001 |
| **8** | 0,063 | 0,01174 | 18,69% | 0,075 | 0,051 |
| **9** | 0,012 | 0,00478 | 40,86% | 0,016 | 0,007 |
| **10** | 0,017 | 0,01267 | 72,83% | 0,030 | 0,005 |
| **11** | 0,002 | 0,00191 | 79,62% | 0,004 | 0,0488% |
| **12** | 0,001 | 0,000593 | 66,70% | 0,001 | 0,0296% |

Il découle du tableau 3 que les copeaux obtenus à partir des matières 1 à 3 présentent une rugosité mesurée par une perte de masse supérieure ou égale à 0,008% en tenant compte de l'écart-type.

Ces caractéristiques techniques définissant les copeaux selon l'invention permettent l'obtention de matériau composite ayant des propriétés mécaniques élevées comme démontré ci-après.

### Exemple 3 : Propriétés mécaniques de pièce en matériau composite

La Demanderesse a mené des essais de caractérisation, en termes de caractéristiques mécaniques, des matériaux obtenus à partir de copeaux selon la présente invention.

Les essais dont les résultats sont décrits ci-après ont été réalisés sur des plaques prototypes de 23 cm par 23 cm et ayant une épaisseur comprise entre 3,5 mm et 3,6 mm.

Les copeaux utilisés dans les essais ici présentés sont issus d'éléments en matériau composite comportant des fibres de carbone selon un agencement unidirectionnel inclus dans un adhésif de type résine époxy. Les éléments employés sont issus de l'industrie aéronautique. Le matériau composite avait des caractéristiques identiques ou similaires au matériau « Plaque carbone UD » dont les caractéristiques sont indiquées dans le tableau 4 ci-dessous.

Les copeaux sont découpés selon l'exemple 1 à partir d'un matériau composite de départ comportant des fibres de carbone selon un agencement unidirectionnel inclus dans un adhésif de type résine époxy.

Les copeaux obtenus sont rectangulaires, et ont une longueur I de 100 mm, une largeur b de 9 mm et une épaisseur comprise entre 0,3 mm et 0,5 mm.

A partir de ces copeaux, les plaques sont réalisées selon le procédé tel que décrit ci-après :
- enduction des copeaux : les copeaux sont mélangés à un adhésif liquide afin de les enduire, en vue de leur moulage ;
- moulage des copeaux sous la forme de panneaux plans ;
- pressage du moule ;
- demoulage de la pièce ; et
- durcissement de la pièce.

Le moule est enduit d'un démoulant et est nappé de manière à réaliser une couche d'adhésif en surface du moule.

L'adhésif utilisé est le système ADEKIT H9011 utilisé selon les recommandations de son fabricant.

Les copeaux sont positionnés manuellement dans le moule.

Le ratio entre les copeaux et l'adhésif est, sauf indication contraire, de 65/35 en masse dans la plaque finie.

Le moulage est réalisé sous presse, en appliquant une force de 20 tonne-force, et en pilotant la température à 70°C environ.

Après démoulage, les plaques sont maintenues une semaine à température ambiante (20°C) pour finaliser le durcissement avant d'être utilisées pour des mesures.

Les plaques ainsi obtenues correspondent à des plaques en matériau composite dont les copeaux, et donc les fibres, sont positionnées selon un arrangement unidirectionnel.

Le tableau 4 ci-dessous compare les caractéristiques mécaniques des plaques UD1 et UD2 à des plaques de référence (plaque UD carbone, plaque en bois, plaque en aluminium).

**Tableau 4 : Propriétés mécaniques**

| Matériau | Densité (g/cm³) | Performances sens longitudinal (0°) | | Performances sens transversal (90°) | | Performances 45° | |
|---|---|---|---|---|---|---|---|
| | | Module de flexion (en GPa) | Contrainte à la rupture (en MPa) | Module de flexion (en GPa) | Contrainte à la rupture (en MPa) | Module de flexion (en GPa) | Contrainte à la rupture (en MPa) |
| Aluminium (5754 H22) | 2,7 | 70 | 300 | 70 | 300 | 70 | 300 |
| Bois (Hêtre) | 0,8 | 14 | 110 | 10 | 100 | 12 | 100 |
| Plaque Carbone UD | 1,45 | 150 | 1500 | 5 | 40 | 10 | 100 |
| Plaque UD1 (50%wt. de copeaux) | 1,3 | 57 | 616 | - | - | - | - |
| Plaque UD2 (65%wt. de copeaux) | 1,3 | 85 | 750 | 4 | 40 | 10 | 100 |

La « plaque carbone UD » correspond à une plaque d'un matériau composite à base de fibres de carbone neuves unidirectionnelles.

Les « Plaque UD1 » et « Plaque UD2 » correspondent à des plaques en matériau composite conformes à des modes de réalisation de l'invention, obtenus comme décrit ci-dessus, et dont les copeaux, et donc les fibres, sont positionnées selon un arrangement unidirectionnel.

Il est notable que le module de flexion et la contrainte à la rupture de la Plaque UD2 (avec 65% de copeaux en masse) est significativement supérieure à 50 % des valeurs obtenues pour la Plaque Carbone UD de référence, soit un matériau composite à base de fibres unidirectionnelles neuves comparables (duquel les copeaux employés peuvent être extraits). En particulier le module de flexion obtenu, dans le sens longitudinal, est égal à 57 % du module de flexion du matériau unidirectionnel neuf comparable à base de fibres de carbone. En ramenant ces résultats à masses égales des panneaux (compte tenu des différences observées en terme de densité), le module de flexion de la Plaque UD2 (avec 65% de copeaux en masse) est égal à 63 % du module de flexion de la Plaque Carbone UD de référence.

Les résultats présentés ci-dessus démontrent l'obtention de matériaux recyclés ayant des grandes performances mécaniques. Ces résultats sont obtenus pour des matériaux comportant une proportion de copeaux pouvant être encore augmentée relativement à la quantité d'adhésif ajoutée (ratio de 65/35 en masse au plus dans les exemples représentés). Or, la Demanderesse a constaté que le pourcentage de copeaux influe directement sur les performances mécaniques obtenues, car il induit le pourcentage de fibres au sein du matériau. Notamment, le module de flexion de la Plaque UD2 (contenant 65% de copeaux en masse) est supérieur de près de 50% à celui de la Plaque UD1 (contenant 50% de copeaux en masse). La résistance à la rupture est quant à elle augmentée de plus de 20%.

Les copeaux selon l'invention permettent donc d'obtenir un matériau recyclé qui présente environ 70% des performances mécaniques, notamment 70 % du module de flexion, et (jusque 75% à 80% des performances à masses identiques) des matériaux comparables à base de fibres neuves, avec un procédé de fabrication simple, et ayant un impact environnemental faible comparativement aux procédés de recyclage chimiques ou thermiques.

En outre, des performances encore supérieures peuvent être atteintes, la Demanderesse ayant réalisé avec succès des pièces contenant plus de 65% en masse de copeaux (en l'occurrence jusqu'à 78 % en masse, et un panneau contenant environ 85% en masse de copeau semble réalisable).

### Exemple 3 : Propriétés mécaniques de pièce en matériau composite

La figure 1 représente, le module de flexion d'un panneau fabriqué à partir de copeaux selon l'invention (obtenus à partir d'un matériau composite à recycler), les copeaux étant organisés de manière unidirectionnelle, et celui d'un panneau obtenu à partir de matériau composite neuf contenant des fibres de carbone orientées de manière unidirectionnelle.

Le module de flexion est porté en ordonnée.

En abscisse est représenté l'angle selon lequel la mesure est réalisée. Un angle de 0° correspond à la direction d'extension des fibres ou des copeaux, et 90° correspond à la direction transversale aux fibres et/ou aux copeaux.

Les triangles correspondent aux mesures réalisées sur une plaque d'un matériau comprenant des copeaux selon l'invention comportant des fibres de carbone unidirectionnelles, lesdits copeaux étant organisés de manière unidirectionnelle. Le module de flexion de cette plaque mesuré dans la direction d'extension des copeaux et des fibres qu'ils contiennent, est de 47 GPa.

Les ronds représentent les modules de flexion théoriques calculés pour une plaque équivalente, formée dans un matériau composite neuf à base de fibres de carbone unidirectionnelles dont le module de flexion dans la direction des fibres qu'il contient serait de 47 GPa.

Il apparaît que, de manière surprenante, les mesures réalisées pour un matériau composite comprenant des copeaux selon l'invention correspondent parfaitement aux valeurs théoriques obtenues pour le matériau neuf formé avec des fibres continues équivalentes.

Ainsi, les propriétés mécaniques d'un élément formé avec les copeaux selon l'invention sont prédictibles selon les connaissances généralement appliquées aux matériaux composites neufs à base de fibres de carbone continues équivalentes.

## Revendications

1. Copeau en matériau composite comportant des fibres de carbone dans un adhésif durci, ledit copeau ayant une épaisseur sensiblement constante définie entre deux faces opposées parallèles du copeau, chaque face comportant en surface des fibres de carbone au moins en partie non incluses dans l'adhésif durci.

2. Copeau selon la revendication 1, dans lequel la partie de la fibre de carbone non incluse dans l'adhésif durci constitue une fibre nue.

3. Copeau selon la revendication 2, présentant un taux surfacique de fibres nues supérieur ou égal à 22%, le pourcentage étant rapporté à la surface totale de la face du copeau analysée.

4. Copeau selon l'une quelconque des revendications 1 à 3, dont une face présente une rugosité mesurée par une perte de masse supérieure ou égale à 0,008%, ladite perte de masse étant mesurée par un test d'abrasion effectuée sur abrasimètre linéaire à l'aide d'une gomme abrasive H18 sur 100 cycles.

5. Copeau selon l'une quelconque des revendications précédentes, présentant une épaisseur comprise entre 200 µm et 1 mm.

6. Copeau selon l'une quelconque des revendications précédentes, dans lequel, lesdites fibres de carbone s'étendent sensiblement parallèlement aux dites faces opposées du copeau.

7. Copeau selon l'une quelconque des revendications précédentes, dans lequel, les fibres de carbones sont orientées dans une même direction.

8. Copeau selon l'une quelconque des revendications précédentes, ayant une forme rectangulaire.

9. Copeau selon l'une quelconque des revendications précédentes, dans lequel, chaque face du copeau présente une surface d'au moins 1 cm².

10. Procédé de fabrication d'un copeau tel que défini selon l'une des revendications 1 à 9, ledit procédé comprenant les étapes suivantes :
- fourniture d'un matériau composite comportant des fibres de carbone orientées de manière sensiblement parallèle dans un adhésif durci;
- découpage mécanique du matériau composite avec un dispositif à lame, ledit découpage étant réalisée en positionnant les fibres de carbones parallèlement à la direction d'avancement de la lame dudit dispositif à lame.
